# EUROPÄISCHE PATENTSCHRIFT

(11) **EP 3 178 701 B1**
(45) Veröffentlichungstag und Bekanntmachung des Hinweises auf die Patenterteilung: **05.06.2019**
(21) Anmeldenummer: 16201758.6
(22) Anmeldetag: 01.12.2016
(51) Int. Cl.: B60R 11/04, B60R 11/00

(54) **VORRICHTUNG ZUR POSITIONSBESTIMMUNG**
DEVICE FOR DETERMINING POSITION
DISPOSITIF DE DÉTERMINATION DE POSITION

(30) Priorität: 09.12.2015 DE 102015121405
(43) Veröffentlichungstag der Anmeldung: 14.06.2017
(73) Patentinhaber: Huf Hülsbeck & Fürst GmbH & Co. KG, 42551 Velbert (DE)
(72) Erfinder: Schütz, Heiko, 42549 Velbert (DE)
(74) Vertreter: Bals, Rüdiger

(56) Entgegenhaltungen:
- EP-A1- 2 796 324
- EP-A2- 1 707 457
- WO-A2-2011/007008
- WO-A2-2011/154290
- DE-A1-102006 048 371
- DE-A1-102014 017 828
- DE-A1-102014 101 685
- US-A1- 2010 206 020

## Beschreibung

Die Erfindung betrifft eine Vorrichtung zur Positionsbestimmung eines beweglichen Bauteils, insbesondere einer Kamera oder eines Deckels oder eines Emblems, eines Kraftfahrzeuges, welches mittels eines Antriebes zwischen einer Arbeitsposition und einer Ruheposition in Bewegung versetzbar ist, gemäß des Oberbegriffs von Anspruch 1. Des Weiteren ist die vorliegende Erfindung auch auf ein Verfahren zum Zusammenbauen einer Baugruppe, mit einem beweglichen Bauteil, insbesondere einer Kamera oder einem Deckel oder einem Emblem, eines Kraftfahrzeuges, einem Antrieb zum Antreiben des beweglichen Bauteils zwischen einer Arbeitsposition und einer Ruheposition, und einem Getriebe zum Übertragen einer Antriebswirkung auf das bewegliche Bauteil, und einer Vorrichtung zur Positionsbestimmung des beweglichen Bauteils, gemäß des Oberbegriffs von Anspruch 14 gerichtet.

Vorrichtungen mit einem beweglichen Bauteil, bspw. mit einer Kamera bzw. einer Heckkamera, die zur Bilderfassung eines Außenbereiches bzw. eines Heckbereiches eines Kraftfahrzeuges dienen kann, sind grundsätzlich bekannt. Bspw. können derartige Kameras im Bereich des assistierten Einparkens von Kraftfahrzeugen zum Einsatz kommen. Hierbei kann die Kamera zwischen einer Ruheposition und einer Arbeitsposition bewegt werden. Wird bspw. der Rückwärtsgang des Kraftfahrzeuges eingelegt, verfährt die Kamera von der Ruheposition in die Arbeitsposition, wobei die Kamera wenigstens teilweise aus dem Gehäuse herausgefahren, bspw. verschwenkt, werden kann. Dadurch wird der Bereich hinter dem Kraftfahrzeug für die Kamera bildlich erfassbar und kann mit Hilfe der durch die Kamera aufgenommenen Bilder auf einem Display für den Fahrer des Kraftfahrzeuges angezeigt werden. Ist die Rückwärtsfahrt beendet und nimmt der Fahrer des Kraftfahrzeuges den Rückwärtsgang wieder heraus, kann die Kamera von der Arbeitsposition wieder zurück in die Ruheposition verschwenkt werden. Auch sind Vorrichtungen mit einem beweglichen Bauteil, bspw. mit einem beweglichen Deckel und/oder einem beweglichen Emblem eines Kraftfahrzeuges, grundsätzlich bekannt, welche zum Abdecken einer solchen Kamera und/oder zur Betätigung eines Schlosses bspw. eines Kofferraumschlosses eingesetzt werden können. Der Deckel bzw. das Emblem können dabei ebenfalls zwischen einer Ruheposition und einer Arbeitsposition bewegt, bspw. verschwenkt, werden. In der Ruheposition kann die Kamera durch den Deckel bzw. das Emblem geschützt werden und in der Arbeitsposition kann die Kamera durch den Deckel bzw. das Emblem freigegeben werden, damit die Kamera Bilder vom Außenbereich des Kraftfahrzeuges aufnehmen kann. Hierbei kann die Kamera entweder auch herausgefahren werden oder auch unbeweglich bleiben. In der Arbeitsposition des Deckels und/oder des Emblems kann stattdessen oder zusätzlich ein weiterer Vorgang eingeleitet werden, bspw. ein Entriegeln des Kofferraumschlosses. Um die Funktionen, die mit den jeweiligen Positionen des beweglichen Bauteils verbunden sind, korrekt auszuführen bzw. richtig einleiten zu können, müssen die Positionen zuverlässig erkannt werden. In herkömmlichen Vorrichtungen werden hierzu Schalter eingesetzt, meistens jeweils ein Schalter für jeweils eine Position. Solche Vorrichtungen sind allerdings kostspielig, kompliziert im Aufbau, aufwendig im Zusammenbau und in der Montage. Mehrere Schalter müssen dabei an unterschiedlichen Stellen in den Vorrichtungen angeordnet sowie aufwendig verkabelt werden und erfordern mehrere Anschlusskontakte.

Eine bekannte Vorrichtung kann aus der Druckschrift DE 10 2006 048 371 A1 gelesen werden.

Der Erfindung liegt daher die Aufgabe zugrunde, eine einfache im Zusammenbau und in der Montage am Kraftfahrzeug, kostengünstige und kompakte Vorrichtung sowie ein Zusammenbauverfahren für eine Baugruppe mit der erwähnten Vorrichtung zur Positionsbestimmung eines beweglichen Bauteils, insbesondere einer Kamera oder eines Deckels oder eines Emblems, eines Kraftfahrzeuges, welches mittels eines Antriebes zwischen einer Arbeitsposition und einer Ruheposition in Bewegung versetzbar ist, zu schaffen, welche zumindest einen aus dem Stand der Technik bekannten Nachteil überwindet. Insbesondere soll die Vorrichtung zuverlässig verschiedene Positionen des beweglichen Bauteils, darunter zumindest die Arbeitsposition und die Ruheposition, und bevorzugt kontinuierlich die aktuelle Position des beweglichen Bauteils, bestimmen können. Ferner soll vorteilhafterweise ein einfacher und robuster Zusammenbau der Vorrichtung möglich sein, die einen kompakten Bauraum aufweist und einfach zu montieren ist.

Diese Aufgabe wird erfindungsgemäß durch eine Vorrichtung mit sämtlichen Merkmalen des unabhängigen Patentanspruches 1 gelöst. Die Erfindung sieht hierzu vor, dass die Vorrichtung mit einem, insbesondere nur einem, Erfassungselement zum Bestimmen der Arbeitsposition und/oder der Ruheposition des beweglichen Bauteils, und einem, insbesondere nur einem, Betätigungselement zum (insbesondere mechanischen und somit energielos) Einwirken auf das Erfassungselement ausgeführt ist, wobei die Vorrichtung derart ausgebildet ist, dass die Bewegung des beweglichen Bauteils (direkt oder indirekt) über das Betätigungselement auf das Erfassungselement übertragbar ist. So kann ein bewegliches Bauteil im Sinne der Erfindung eine mittelbare Übertragung seiner Bewegung, wie von der Erfindung vorgeschlagen, ausnutzen, um mehrere Positionen mit einfachen Mitteln, insbesondere rein mechanisch, zuverlässig zu erkennen.

Der Erfindungsgedanke liegt dabei darin, die Bewegung des beweglichen Bauteils mittelbar (mit Hilfe und insbesondere mechanisch), zumindest über das Betätigungselement, auf das Erfassungselement zu übertragen. Die mittelbare Übertragung ermöglicht es, das Erfassungselement beabstandet zum beweglichen Bauteil anzuordnen und den Zusammenbau der Vorrichtung zu erleichtern. Erfindungsgemäß kann hierzu vorgesehen sein, dass die Bewegung des beweglichen Bauteils über ein Getriebe, insbesondere eine Zahnrad, auf das Betätigungselement und daraufhin vom Betätigungselement (insbesondere rein mechanisch) auf das Erfassungselement übertragen werden kann. Hierbei kann das Getriebe dem Antrieb nachgeschaltet sein, um die Antriebswirkung vom Antrieb auf das bewegliche Bauteil zu übertragen. Dabei wird die Bewegung eines Getriebeelementes (z. B. in Form eines Getriebe-/Zahnrades), die mit der Bewegung des beweglichen Bauteils einhergeht, ausgenutzt, um bestimmte Positionen des beweglichen Bauteils zu detektieren. Hierbei ist es denkbar eine Bewegung und Positionen eines Getrieberades zu sensieren, um auf die Bewegung und entsprechende Positionen des beweglichen Bauteils zu schließen. Erfindungsgemäß kann die Bewegung des beweglichen Bauteils außerdem kontinuierlich auf das Erfassungselement übertragbar sein. "Kontinuierlich übertragbar" heißt im Sinne der Erfindung, dass die Bewegung des beweglichen Bauteils über mindestens einen Bewegungsabschnitt zwischen der Ruheposition und der Arbeitsposition, und nicht nur gezielt in nur einer Position wie in herkömmlichen Vorrichtungen, über das Betätigungselement auf das Erfassungselement übertragbar sein kann. Hierbei kann der Bewegungsabschnitt vollständig zwischen der Ruheposition und der Arbeitsposition übertragbar sein oder zumindest zum Teil, je nachdem welche Positionen für die Positionsbestimmung im jeweiligen Kraftfahrzeug relevant sind. Auch ist es dabei denkbar, dass die Übertragung je nach Position des beweglichen Bauteils mit unterschiedlicher Wirkung bzw. Stärke erfolgen kann, um den Bewegungsabschnitt noch in Teilabschnitte zu unterteilen, die genau durch das Erfassungselement detektiert und untereinander unterschieden werden können. Somit ist es gemäß der Erfindung möglich, zu jeder Zeit die genaue Position des beweglichen Bauteils zu erfassen. Hierzu kann das Erfassungselement als ein Schalter oder Taster, bspw. ein "0/1" oder ein "0/1/2" oder ein Multisignal-Schalter, Taster oder Geber, ein Einkomponeten- oder ein Mehrkomponenten-Kraftmesser zur direkten oder indirekten Kraftmessung, ein Druckmesser, ein Dehnungsmesser, ein Drehmomentmesser, ein Hall-Sensor, wenn das Betätigungselement ein natürlicher oder elektrischer Magnet ist, oder dergleichen ausgebildet sein. Je nach Anforderungen in unterschiedlichen Einsatzbereichen der Vorrichtung kann die eine oder die andere Art des Erfassungselementes und/oder des Betätigungselementes vorteilhaft sein. Die zuverlässigen Informationen der Positionsbestimmung gemäß der Erfindung ermöglichen eine verbesserte Ansteuerung des beweglichen Bauteils, bspw. durch ein externes Steuergerät bzw. ein zentrales Steuergerät im Kraftfahrzeug. Diese Informationen sind aber auch für andere Funktionen im Kraftfahrzeug wichtig, die mit den Positionen des beweglichen Bauteils verbunden sind, wie bspw. Betätigung eines Schlosses, Freigeben einer Kamera, Verriegeln einer Lenksäule und dergleichen.

Erfindungsgemäß sind/ist das Erfassungselement und/oder das Betätigungselement zum Bestimmen der Arbeitsposition und der Ruheposition des beweglichen Bauteils ausgeführt. Vorteilhaft ist dabei, dass ein, insbesondere genau nur ein, Erfassungselement und nur ein, insbesondere genau nur ein, Betätigungselement für beide Endpositionen des beweglichen Bauteils, nämlich die Arbeitsposition und/oder die Ruheposition, genutzt werden können. Insbesondere im Vergleich zu Vorrichtungen, in welchen das bewegliche Bauteil unmittelbar das Erfassungselement betätigt, ist die Erfindung vorteilhaft, da die mittelbare Übertragung zumindest durch das Betätigungselement es erlaubt, das Erfassungselement beabstandet (und damit baulich getrennt) zum beweglichen Bauteil anzuordnen. Dadurch erwächst außerdem der Vorteil, dass mehrere Positionen des beweglichen Bauteils durch nur ein Erfassungselement erfasst werden können, wobei zur entsprechenden Betätigung des Erfassungselementes nur ein Betätigungselement eingesetzt werden kann. Zudem kann es im Rahmen der Erfindung möglich sein, die Bewegung des beweglichen Bauteils in jeder Position, beispielhaft kontinuierlich, d. h. in der Arbeitsposition und in der Ruheposition sowie in mehreren Positionen dazwischen, insbesondere in jeder Position dazwischen, über das Betätigungselement auf das Erfassungselement zu übertragen. Hierzu kann das Betätigungselement mit dem Getriebe zusammenwirken, welches zum Übertragen der Antriebswirkung vom Antrieb auf das bewegliche Bauteil vorgesehen ist, wobei eine Position eines Getriebeelementes sich mit der Position des beweglichen Bauteils verändern kann. Dabei kann das Betätigungselement zwischen dem Getriebe und dem Erfassungselement angeordnet sein. Folglich kann die Vorrichtung mit nur einem Erfassungselement und mit nur einem Betätigungselement für unterschiedliche Positionen des beweglichen Teils erheblich vereinfacht werden, deren Zusammenbau kann erleichtert werden und die Kosten der Herstellung, des Zusammenbaus und der Montage der Vorrichtung können deutlich reduziert werden. Der Einsatz von nur einem Erfassungselement und nur einem Betätigungselement ermöglicht weiterhin eine einfache Verkabelung und eine vorteilhafte, geschützte Verlegung von Kabeln. Dies ist bei dem Zusammenbau der Vorrichtung von erheblichem Vorteil, da weniger bzw. kürzere Kabel an unterschiedlichen Stellen innerhalb der Vorrichtung entlanggeführt und untergebracht werden müssen.

Ferner kann es im Rahmen der Erfindung vorgesehen sein, dass das Erfassungselement derart ausgeführt sein kann, um mit einer externen Steuereinheit des Kraftfahrzeuges, insbesondere des beweglichen Bauteils, zu kommunizieren. Das Erfassungselement kann zu diesem Zweck über eine Datenschnittstelle (Datenkabel) verfügen oder direkt ein "1/0" Signal über eine (insbesondere 2-kablige) Versorgungsleitung liefern. Ferner kann das Erfassungselement gemäß der Erfindung derart verkabelt sein, dass die Verkabelung des Antriebes für das bewegliche Bauteil mit der Verkabelung des Erfassungselementes außerhalb der Vorrichtung zusammen durchgeführt werden können, insbesondere in einem gemeinsamen Verbundkabel. Die Befehle zur Ansteuerung des Antriebes können somit mit den Informationen der Positionsbestimmung einfacher koordiniert werden. Vorteilhaft ist dabei, dass das Erfassungselement nicht zwangsläufig in der Nähe des beweglichen Bauteils befestigt werden muss. So kann das Erfassungselement möglichst nahe an den Antrieb positioniert werden, um somit eine aufwendige Verlegung von Kabeln oder Anschlusskontakten auf eine vorteilhafte erfindungsgemäße Weise zu vermeiden.

Vorteilhafterweise kann es im Rahmen der Erfindung vorgesehen sein, dass das Erfassungselement derart ausgeführt sein kann, um zwischen der Arbeitsposition und der Ruheposition des beweglichen Bauteils ein Signal auszugeben. Hierbei kann der Vorteil genutzt werden, dass die Bewegung erfindungsgemäß mittelbar übertragen wird. Dabei kann das Betätigungselement bspw. mit einem Getrieberad zusammenwirken, welches sich dreht, um das bewegliche Bauteil in Bewegung zu versetzen. Solange das bewegliche Bauteil in Bewegung ist bzw. solange das Getrieberad sich dreht, kann das Betätigungselement aktiviert werden, um auf das Erfassungselement einzuwirken. Der Vorteil liegt dabei darin, dass die Erfindung zu bestimmen hilft, wann überhaupt das bewegliche Bauteil sich bewegt. Zudem kann es im Rahmen der Erfindung selbstverständlich bestimmt werden, wie die Bewegung abläuft, nämlich welche Positionen das bewegliche Bauteil passiert, wie schnell die Bewegung abläuft und dergleichen.

Des Weiteren kann es im Rahmen der Erfindung vorgesehen sein, dass das Erfassungselement derart ausgeführt sein kann, um in der Arbeitsposition und in der Ruheposition des beweglichen Bauteils kein Signal auszugeben. Hierbei ist es vorteilhaft, dass die Positionen, in welchen das bewegliche Bauteil sich länger aufhält als in der Bewegung, stromlos realisiert werden können. Nur der Zustand der Bewegung kann dabei sensiert werden. Hierbei kann anhand der Laufrichtung des Getriebes sicher zwischen der Ruheposition und der Arbeitsposition des beweglichen Bauteils unterschieden werden. Zusätzlich hierzu kann selbstverständlich bei der Bewegung des beweglichen Bauteils zwischen verschiedenen Zwischenpositionen des beweglichen Bauteils unterschieden werden. Weiterhin kann es im Rahmen der Erfindung vorgesehen sein, dass das Erfassungselement zum Ausgeben eines "0/1" Signals ausgeführt sein kann, und dass insbesondere das Erfassungselement in Form eines Schalters, insbesondere in Form eines Mikroschalters oder -tasters, ausgeführt sein kann. Hierbei kann der Vorteil erreicht werden, dass günstige und einfache Bauteile eingesetzt werden können, um die Positionen des beweglichen Bauteils zu bestimmen.

Auch ist es im Rahmen der Erfindung denkbar, dass das Erfassungselement derart ausgeführt sein kann, um in der Arbeitsposition ein Signal und in der Ruheposition kein Signal auszugeben oder umgekehrt. Somit kann vorteilhafterweise mit Hilfe nur eines Schalters, Tasters oder Sensors und auf eine einfache Weise zwischen unterschiedlichen Endpositionen des beweglichen Bauteils, nämlich der Ruheposition und der Arbeitsposition, direkt durch ein Ausgabesignal am Erfassungselement unterschieden werden. Hierbei ist es denkbar, dass das Erfassungselement zum Ausgeben eines "0/1/2" Signals ausgeführt sein kann, und dass insbesondere das Erfassungselement in Form eines Schalters ausgeführt sein kann. Somit kann das Erfassungselement bzw. der Schalter in einer der Endpositionen, wie der Ruheposition, kein Signal ausgeben, um die Energie zu sparen, in der anderen Endposition, wie der Arbeitsposition, ein Signal ausgeben, das bspw. signalisieren kann, dass z. B. die Heckkamera im Betrieb ist bzw. zum Betrieb bereit ist. Dazwischen kann das Erfassungselement bzw. der Schalter auch ein Signal ausgeben, bspw. einer anderen Stärke, um zu signalisieren, dass die Überführung des beweglichen Bauteils zwischen den Endpositionen stattfindet.

Im Rahmen der Erfindung kann es vorteilhafterweise vorgesehen sein, dass das Betätigungselement in Form eines Stößels ausgebildet sein kann, bspw. eines Verbindungsstößels (mit zwei verstärkten/verschleißfreien Enden), welcher vorteilhafterweise zwischen dem Erfassungselement und einem Getrieberad beweglich, insbesondere linear verschieblich, aufgenommen sein kann. Zudem kann es im Rahmen der Erfindung vorgesehen sein, dass das Betätigungselement mit einer (Druck-)Feder, insbesondere in abgewandter Richtung vom Erfassungselement, beaufschlagt sein kann. Hierbei ist es von Vorteil, dass das Betätigungselement ein einfaches Bauteil ist, welches mit Hilfe der Feder grundsätzlich weg vom Erfassungselement beaufschlagt ist und nur bei einer Bewegung des beweglichen Bauteils bspw. eines Getrieberades zum Erfassungselement hineingedrückt werden kann. Vorteilhafterweise kann das Betätigungselement im Sinne der Erfindung zum Toleranzausgleich am Erfassungselement ausgelegt sein. Erfindungsgemäß kann dabei ein gewisses Spiel, d. h. ein Abstand, zwischen dem Betätigungselement und dem Erfassungselement eingehalten werden, der als Sicherheitsabstand genutzt werden kann, um den Zusammenbau der Vorrichtung zu vereinfachen. Ferner ist es denkbar, dass das Betätigungselement in einer Gehäuseführung sicher geführt werden kann, die im Gehäuse der Vorrichtung ausgebildet sein kann und die sich zwischen dem Erfassungselement und einem Getrieberad erstrecken kann. Die Gehäuseführung und das Betätigungselement können dabei senkrecht zum Getrieberad bzw. parallel zur Drehachse des Getrieberad angeordnet sein, wobei das Getrieberad insbesondere eine seitliche Erhebung und/oder eine Vertiefung aufweisen kann, die bewirken kann, dass das Betätigungselement zum Einwirken auf das Erfassungselement aus der Gehäuseführung hinausfahren kann. Die erfindungsgemäße Vorrichtung kann ein solches Getrieberad aufweisen, das ein herkömmliches Getrieberad ersetzen kann.

Im Rahmen der Erfindung ist es denkbar, dass ein Gehäuse vorgesehen sein kann, welches zumindest ein erstes Gehäuseteil und ein zweites Gehäuseteil aufweisen kann, wobei das erste Gehäuseteil zumindest zum Teil einen Aufnahmeraum für das bewegliche Bauteil, insbesondere einer Kamera, begrenzen kann, und wobei das zweite Gehäuseteil zumindest zum Teil einen Aufnahmeraum für den Antrieb begrenzen kann. Das erste Gehäuseteil kann dabei die Bewegung des beweglichen Bauteils zumindest zum Teil stützen und/oder mitbestimmen. Am oder im ersten Gehäuseteil können hierzu zumindest spezielle Übertragungselemente, Hebelelemente, Schaukelelemente Schlitten, Kulissen oder dergleichen aufgenommen oder ausgebildet werden, die den Antrieb des beweglichen Bauteils auf eine vorteilhafte Weise erleichtern und den Bewegungsablauf des beweglichen Bauteils auf eine erforderliche Weise beeinflussen können. Das zweite Gehäuseteil kann dabei zur Aufnahme eines Antriebes vorgesehen sein, wobei die Wand zwischen dem ersten und dem zweiten Gehäuseteil zum beweglichen, bspw. drehbaren, Lagern eines Getriebes, insbesondere von der Seite des zweiten Gehäuseteils genutzt werden kann. Zudem kann durch zwei Gehäuseteile und somit zwei unterschiedliche Aufnahmeräume für das bewegliche Bauteil und den Antrieb, der Zusammenbau der Vorrichtung erleichtert werden. Außerdem kann dadurch ermöglicht werden, dass der Antrieb neben dem beweglichen Bauteil angeordnet werden kann und nicht hinter dem beweglichen Bauteil, um die Bautiefe der Vorrichtung zu verringern. Vorteilhafterweise können das Erfassungselement und das Betätigungselement im zweiten Gehäuseteil befestigt sein. Dadurch können sich mehrere signifikante Vorteile ergeben, die darin liegen können, dass die Verkabelung des Erfassungselementes nahe der Steckerbuchse für den Antrieb verlegt werden kann, so dass die Verkabelung des Erfassungselementes durch die Bewegung des beweglichen Bauteils und durch den Zusammenbau der Vorrichtung nicht beeinträchtigt werden muss, und so dass die Verkabelung des Erfassungselementes und die Verkabelung des Antriebes außerhalb der Vorrichtung in einem gemeinsamen Verbundkabel zusammenlaufen können.

Zudem kann die Erfindung vorsehen, dass das Gehäuse, insbesondere das zweite Gehäuseteil, ein Aktivelement, insbesondere in Form eines Schalters, Tasters oder Sensorelementes (z. B. Piezoelement oder (kapazitiver) Näherungsensor), aufnehmen kann, welches zur Betätigung einer Schließvorrichtung des Kraftfahrzeuges ausgelegt sein kann. Dabei ist es denkbar, dass das Aktivelement zur Betätigung eines Schlosses, bspw. eines Kofferraumschlosses, ausgelegt sein kann. Hierbei ist es vorteilhaft, dass die Vorrichtung als eine Baugruppe ausgelegt sein kann, insbesondere mit einer Heckkamera, einem Antrieb zu deren Betätigung und/oder eines Deckels und dem Aktivelement zum Betätigen des Kofferraumschlosses. Diese Baugruppe kann dabei außerhalb des Kraftfahrzeuges zusammengebaut werden und im zusammengebauten Zustand am Kraftfahrzeug, bspw. an einer oder unterhalb einer Heckklappe, montiert werden.

Weiterhin ist es denkbar, dass das Gehäuse vorderseitig ein Verkleidungselement aufweisen kann, welches (durch Verbindungsmittel, insbesondere in Form von Rastmitteln) zur Befestigung der Vorrichtung an einer Montageöffnung des Kraftfahrzeuges ausgelegt sein kann. Außerdem kann das Verkleidungselement als ein Montageträger agieren, um beim Zusammenbau der Vorrichtung sämtliche Gehäuseteile zum Befestigen darauf aufzunehmen. Dabei ist es vorteilhaft, dass die Vorrichtung als Ganzes im zusammengebauten Zustand lediglich durch Befestigung des Verkleidungselementes an einer Montageöffnung am Kraftfahrzeug montiert werden kann. Hierzu können kraft- und/oder formschlüssige Verbindungsmittel vorgesehen sein, wie bspw. eine Rast-, eine Klemm, eine Clipsverbindung oder dergleichen. Hierbei kann das Verkleidungselement nach Material und Farbe dem äußeren Erscheinungsbild des Kraftfahrzeuges angepasst sein. Außerdem ist es denkbar, dass das Verkleidungselement eine, insbesondere korrosionsfeste Beschichtung aufweisen kann, die zum Design des Kraftfahrzeuges passen kann.

Vorteilhafterweise kann im Sinne der Erfindung vorgesehen sein, dass das Gehäuse, insbesondere das erste Gehäuseteil und das zweite Gehäuseteil eine Längserstreckung, insbesondere in Fahrzeugquerrichtung, aufweisen können, so dass der Aufnahmeraum für das bewegliche Bauteil und der Aufnahmeraum für den Antrieb in Fahrzeugquerrichtung nebeneinander liegen können. Hierdurch kann der Vorteil erreicht werden, dass die Vorrichtung in Fahrzeugquerrichtung positioniert werden kann, um den Montageraum in Fahrzeuglängsrichtung (gemeint ist die Bautiefe) zu reduzieren.

Ferner kann es im Sinne der Erfindung von Vorteil sein, wenn das Gehäuse, insbesondere das zweite Gehäuseteil, zumindest eine Steckerbuchse für den Antrieb aufweisen kann, wobei insbesondere das Erfassungselement angrenzend an die Steckerbuchse für den Antrieb angeordnet sein kann oder direkt in die Steckerbuchse für den Antrieb integriert sein kann. Das Erfassungselement kann direkt mit der Steckerbuchse elektrisch verbunden sein. Somit kann eine aufwendige Verlegung von Kabeln oder Anschlusskontakten bis ins erste Gehäuseteil in die Nähe des beweglichen Bauteils, wie bei herkömmlichen Vorrichtungen, vermieden werden. Bei der Montage kann somit bspw. die Kamera getrennt vom Antrieb montiert werden, wobei der Antrieb im zweiten Gehäuseteil zusammen mit der Steckerbuchse für den Antrieb und dem erfindungsgemäßen Erfassungselement und dem Betätigungselement aufgenommen werden kann. Dadurch kann ein Abknicken eines Schaltkontaktes des erfindungsgemäßen Erfassungselementes beim Zusammenbau der Vorrichtung vorteilhafterweise vermieden werden. Folglich kann erfindungsgemäß eine einfache und fachgerechte Montage ohne Beschädigung des Erfassungselementes ermöglicht werden.

Ferner kann es im Rahmen der Erfindung vorgesehen sein, dass ein Schaltkontakt für das Erfassungselement in oder an der Steckerbuchse für den Antrieb integriert sein kann. Somit kann die elektrische Kontaktierung des Erfassungselementes in der Steckerbuchse für den Antrieb realisiert werden. Hierbei kann außerdem vorgesehen sein, dass bspw. ein Schaltkontakt vom Erfassungselement mit einem Stanzgitter elektrisch verbunden sein kann, wobei insbesondere das Stanzgitter in der Steckerbuchse für den Antrieb eingespritzt sein kann und die Anschlusskontakte der Buchse bilden können. Ferner kann der Aufbau der Vorrichtung noch weiter vereinfacht werden. Die elektrischen Anschlüsse (des Antriebes und des Erfassungselementes) können dabei zusammengelegt werden und im Gehäuse der Vorrichtung, insbesondere mit Kunststoff umspritzt werden. Somit kann außerdem das Gehäuse der Vorrichtung stabilisiert werden und der elektrischen Isolation für das Stanzgitter dienen.

Erfindungsgemäß kann das Betätigungselement zwischen einem Getriebe für den Antrieb und dem Erfassungselement angeordnet sein, wobei insbesondere das Betätigungselement mit einem Getriebe für den Antrieb zusammenwirken kann. Dadurch kann der Vorteil erreicht werden, dass das Betätigungselement nicht direkt die Bewegung des beweglichen Bauteils übertragen muss, sondern eine komplementäre Bewegung eines Getrieberades/Zahnrades des Getriebes. Somit kann das Betätigungselement außerhalb des ersten Gehäuseteils angeordnet werden, insbesondere im zweiten Gehäuseteil. Hierbei kann das Betätigungselement senkrecht zum Getrieberad (gemeint ist parallel zur Drehachse) positioniert werden, wobei das Betätigungselement in eine Richtung senkrecht zum Getrieberad, insbesondere linear, verschiebbar ist, um das Betätigungselement zu aktivieren. Das Getrieberad kann zum Aktivieren des Betätigungselementes eine oder mehrere (seitliche) Vertiefungen und/oder Erhebungen, insbesondere in Form von (bogenförmigen) Führungen, aufweisen. Wenn sich das Getrieberad des Getriebes dreht, können die Erhebungen und/oder die Vertiefungen auf dem Getrieberad das Betätigungselement senkrecht zur Oberfläche des Getrieberades verschieben, insbesondere zum Erfassungselement hin herausdrücken, um dieses insbesondere mechanisch zu betätigen.

Hierzu kann im Rahmen der Erfindung ein Getrieberad vorgesehen sein, welches in einem Getriebe für den Antrieb eingesetzt werden kann, um auf das Betätigungselement einzuwirken. Zum Aktivieren des Betätigungselementes kann das Getrieberad eine (bogen- und/oder kreisbogenförmige) Führung, insbesondere eine Kulissenführung, aufweisen. Die Kulissenführung kann die bereits oben erwähnten Vertiefungen und/oder Erhebungen aufweisen, die ein Verschieben des Betätigungselementes, insbesondere in Form eines Stößels, senkrecht zur Oberfläche des Getrieberades bewirken können. Die Vertiefungen und/oder Erhebungen können dabei in ihrer Höhe unterschiedlich ausgestaltet sein und folglich ein veränderliches Höhenprofil (je nach Position des beweglichen Bauteils) aufweisen, wodurch besonders einfach unterschiedliche Positionen vom Erfassungselement über das Betätigungselement messtechnisch erfasst werden können.

Weiterhin kann im Rahmen der Erfindung ein zweites Erfassungselement im ersten Gehäuseteil vorgesehen sein, um die Ruheposition und/oder die Arbeitsposition des beweglichen Bauteils zu detektieren. Dieses zweite Erfassungselement kann zum Plausibilisieren der Signale des Erfassungselementes dienen.

Erfindungsgemäß kann die beschriebene Vorrichtung als eine Kameravorrichtung, insbesondere eine Heckkameravorrichtung, des Kraftfahrzeuges ausgebildet sein. Vorteilhafterweise kann somit die Vorrichtung die Funktion und die Ansteuerung der Heckkamera verbessern.

Ferner ist die vorliegende Erfindung auch auf ein Verfahren zum Zusammenbauen einer Baugruppe gerichtet, die mit einem beweglichen Bauteil, insbesondere einer Kamera oder einem Deckel oder einem Emblem, eines Kraftfahrzeuges, einem Antrieb zum Antreiben des beweglichen Bauteils zwischen einer Arbeitsposition und einer Ruheposition, einem Getriebe zum Übertragen einer Antriebswirkung auf das bewegliche Bauteil, und einer Vorrichtung zur Positionsbestimmung des beweglichen Bauteils, insbesondere nach einem der vorhergehenden Ansprüche, ausgeführt ist. Hierbei ist die Vorrichtung mit einem Gehäuse, welches zumindest ein erstes Gehäuseteil und ein zweites Gehäuseteil aufweist, wobei das erste Gehäuseteil zumindest zum Teil einen Aufnahmeraum für das bewegliche Bauteil begrenzt, und wobei das zweite Gehäuseteil zumindest zum Teil einen Aufnahmeraum für den Antrieb begrenzt, und, insbesondere nur, einem Erfassungselement zum Bestimmen der Arbeitsposition und/oder der Ruheposition des beweglichen Bauteils, ausgeführt, gekennzeichnet durch folgende Schritte:
a) Montieren des beweglichen Bauteils, insbesondere der Kamera, im bzw. am ersten Gehäuseteil,
b) Montieren des Antriebes und/oder des Getriebes für den Antrieb im bzw. am zweiten Gehäuseteil,
c) Montieren des Erfassungselementes im bzw. am zweiten Gehäuseteil, insbesondere zwischen dem Antrieb und dem Getriebe.

Mit Hilfe des erfindungsgemäßen Verfahrens werden die gleichen Vorteile erreicht, die zuvor im Zusammenhang mit der erfindungsgemäßen Vorrichtung beschrieben wurden, so dass diesbezüglich auf den vollständigen Offenbarungsgehalt zwischen dem Verfahren und der Vorrichtung wechselseitig Bezug genommen werden kann bzw. soll. Technische Merkmale der Vorrichtung gelten somit auch für das Verfahren und umgekehrt, um Wiederholungen zu vermeiden.

Weitere Maßnahmen und Vorteile der vorliegenden Erfindung ergeben sich aus den Ansprüchen, der nachfolgenden Beschreibung und den Zeichnungen. In den Zeichnungen ist die Erfindung in unterschiedlichen Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Fig. 1: eine perspektivische Ansicht auf eine erfindungsgemäße Vorrichtung,
- Fig. 2: eine vergrößerte Darstellung der erfindungsgemäße Vorrichtung,
- Fig. 3: eine schematische Darstellung eines erfindungsgemäßen Erfassungselementes und eines erfindungsgemäßen Betätigungselementes,
- Fig. 4a: eine schematische Darstellung der erfindungsgemäßen Vorrichtung in einer Ruheposition eines beweglichen Bauteils,
- Fig. 4b: eine schematische Darstellung der erfindungsgemäßen Vorrichtung in einer ersten Zwischenposition des beweglichen Bauteils,
- Fig. 4c: eine schematische Darstellung der erfindungsgemäßen Vorrichtung in einer zweiten Zwischenposition des beweglichen Bauteils,
- Fig. 4d: eine schematische Darstellung der erfindungsgemäßen Vorrichtung in einer Arbeitsposition des beweglichen Bauteils,
- Fig. 5a: eine schematische Darstellung des erfindungsgemäßen Erfassungselementes und des erfindungsgemäßen Betätigungselementes in der Nähe der Ruheposition und der Arbeitsposition des beweglichen Bauteils,
- Fig. 5b: eine schematische Darstellung des erfindungsgemäßen Erfassungselementes und des erfindungsgemäßen Betätigungselementes während einer Bewegung des beweglichen Bauteils zwischen der Ruheposition und der Arbeitsposition,
- Fig. 5c: eine schematische Darstellung eines herkömmlichen Erfassungselementes in einem ersten Bewegungsabschnitt des beweglichen Bauteils,
- Fig. 5d: eine schematische Darstellung des herkömmlichen Erfassungselementes in einem zweiten Bewegungsabschnitt des beweglichen Bauteils,
- Fig. 6a: eine perspektivische Ansicht auf die erfindungsgemäße Vorrichtung mit einem zusätzlichen Erfassungselement, und
- Fig. 6b: eine vergrößerte Darstellung auf die Vorrichtung gemäß der Figur 6a.

In den nachfolgenden Figuren werden für die gleichen technischen Merkmale auch von unterschiedlichen Ausführungsbeispielen der Erfindung die identischen Bezugszeichen verwendet.

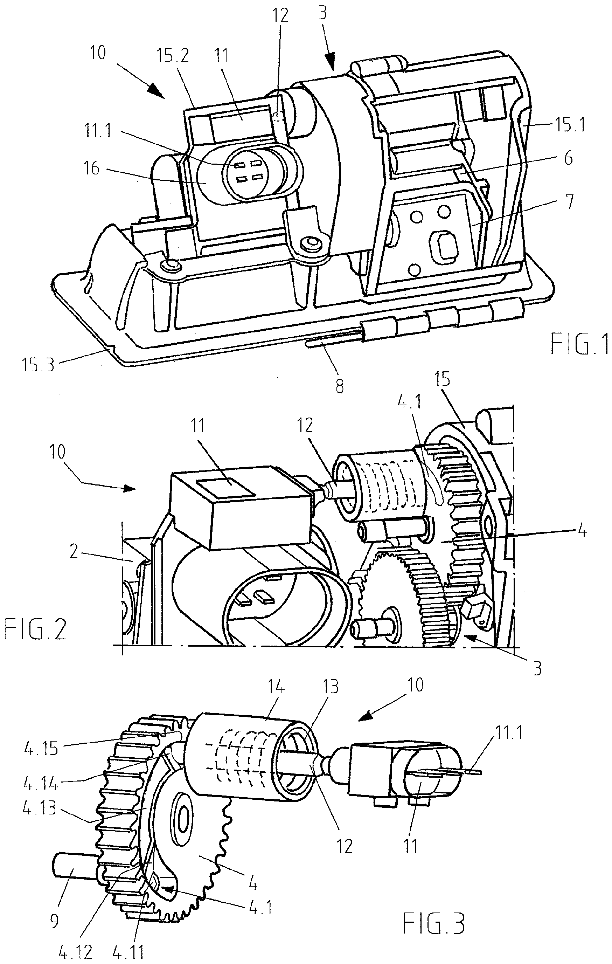

Die Figuren 1 bis 3 sowie die Figuren 6a und 6b zeigen eine erfindungsgemäße Vorrichtung 10 zur Positionsbestimmung eines beweglichen Bauteils 1, insbesondere einer Kamera 1 oder eines Deckels 8 oder eines Emblems, eines Kraftfahrzeuges, welches mittels eines Antriebes 2 zwischen einer Arbeitsposition II und einer Ruheposition I bewegbar ist. Die Vorrichtung 10 zeichnet sich durch ein Erfassungselement 11 in Form eines Schalters, Tasters, Signalgebers oder Sensors 11 aus (nachfolgend nur als Schalter genannt), welches insbesondere in der Nähe des Antriebes 2 angeordnet ist. Das Erfassungselement 11 dient zur Bestimmung der Arbeitsposition II und der Ruheposition I der Kamera 1. Ferner zeichnet sich die Vorrichtung 10 durch ein Betätigungselement 12 aus, welches in oder an der Vorrichtung 10 zwischen dem Erfassungselement 11 und einem Getriebe 3, zum Übertragen der Antriebswirkung auf die Kamera 1, angeordnet ist. Das Betätigungselement 12 dient zum mechanischen Einwirken auf das Erfassungselement 11. Erfindungsgemäß ist die Vorrichtung 10 derart ausgebildet, um die Bewegung der Kamera 1 über das Betätigungselement 12 auf das Erfassungselement 11 zu übertragen.

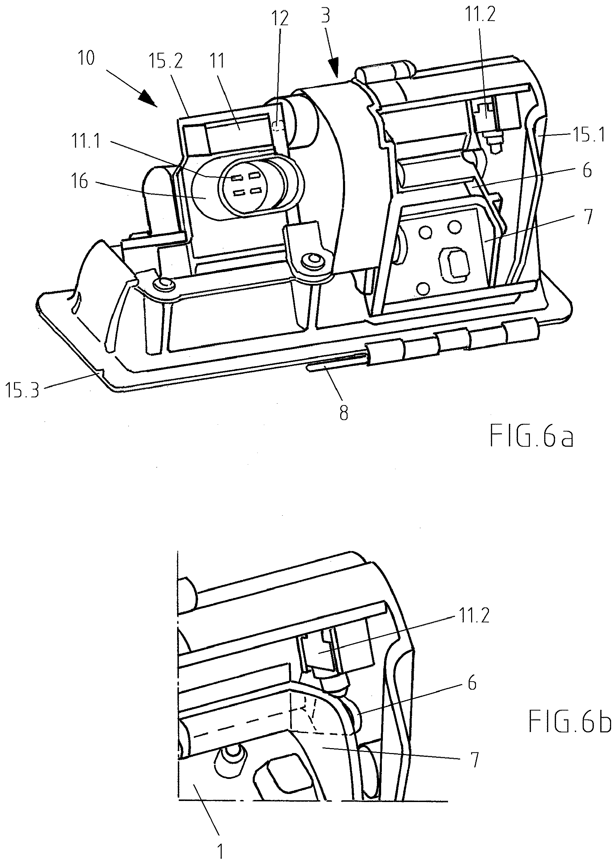

Gemäß der Erfindung erfolgt die Übertragung der Bewegung der Kamera 1 über das Getriebe 3 und im Speziellen über ein Getrieberad/Zahnrad 4 auf das Betätigungselement 12 und vom Betätigungselement 12 vorzugsweise mechanisch (und somit energielos) auf das Erfassungselement 11. Dabei wird im Sinne der Erfindung von einer mittelbaren Übertragung gesprochen. Das Erfassungselement 11 kann bei der erfindungsgemäßen Vorrichtung 10 durch ein Spiel beabstandet zum beweglichen Bauteil 1 angeordnet sein, wodurch der Zusammenbau vereinfacht wird und eine Zerstörung des Betätigungselements 12 durch einen direkten Kontakt zum Getriebe 3 vermieden wird. Die Figuren 6a, 6b, 4a bis 4d sowie 5c und 5d zeigen ein lediglich optionales, zusätzliches, zweites Erfassungselement 11.2, welches - wie bei bekannten Vorrichtungen - in der Nähe der Kamera 1 angeordnet sein kann, um die Bewegung der Kamera 1 unmittelbar zu erfassen. Wie in den Figuren 6a, 6b, 4a bis 4d sowie 5c und 5d gezeigt ist, kann bei so einem nahe gelegenem Schalter 11.2 zu unmittelbaren Betätigung durch die Kamera 1 bei der Bewegung der Kamera 1 ein Schaukelelement 6 (was die Kamera 1 beidseitig seitlich umfasst und lagert) der Kamera 1 direkt auf das zweite Erfassungselement 11.2 einwirken.

Das erfindungsgemäße Erfassungselement 11 ist vorteilhafterweise derart positioniert, um mittelbar durch das Getrieberad 4 und durch das Betätigungselement 12 die Bewegung der

Kamera 1 zu erfassen. Die Erfindung nutzt dabei aus, dass die Drehung der Kamera 1 zwischen der Ruheposition I und der Arbeitsposition II einer entsprechenden Drehung am Getriebe 3, insbesondere dem Getrieberad 4 entspricht, wobei im dargestellten Ausführungsbeispiel die Drehung des Getrieberades 4 zwischen 0° und 180° erfolgt.

Wie in den Figuren 2 und 3 zu erkennen ist, ist die erfindungsgemäße Vorrichtung 10 derart ausgeführt, dass sowohl die Arbeitsposition II als auch die Ruheposition I der Kamera 1 mit Hilfe nur eines Erfassungselementes 11 sensiert werden können. Hierzu wird das Betätigungselement 12 durch das Getrieberad 4, welches eine bogenförmige Führungskulisse 4.1 (mit einem Höhenprofil) zum Einwirken auf das Betätigungselement 12 aufweist, aktiviert bzw. entlang einer Richtung senkrecht zur Oberfläche des Getrieberades 4.1 durch das Höhenprofil aus der Führungskulisse 4.1 heraus- oder in die Führungskulisse 4.1 hineingedrückt. Das Betätigungselement 12 ist dabei in einer Gehäuseführung 14 linear beweglich aufgenommen und mit Hilfe einer Feder 13 in Richtung weg vom Erfassungselement 11 bzw. vom Schalter 11 und hin zum Getrieberad 4 beaufschlagt und an das Höhenprofil in der Führungskulisse 4.1 gepresst. Das Betätigungselement 12 kann beim Herausfahren aus der Gehäuseführung 14 als ein Stößel auf den Schalter 11 oder Taste 11 einwirken. Die Führungskulisse 4.1 am Getrieberad 4 ist dabei als Höhenprofil mit mehreren speziellen Vertiefungen 4.11, 4.15 und Erhebungen 4.12, 4.13, 4.14 ausgeführt, in die das Betätigungselement 12 eintauchen kann bzw. durch die das Betätigungselement 12 herausgedrückt werden kann. Beim Herausdrücken des Betätigungselementes 12 wird die Feder 13 komprimiert und das Betätigungselement 12 aus der Gehäuseführung 14 hinaus zum Schalter 11 herausgedrückt.

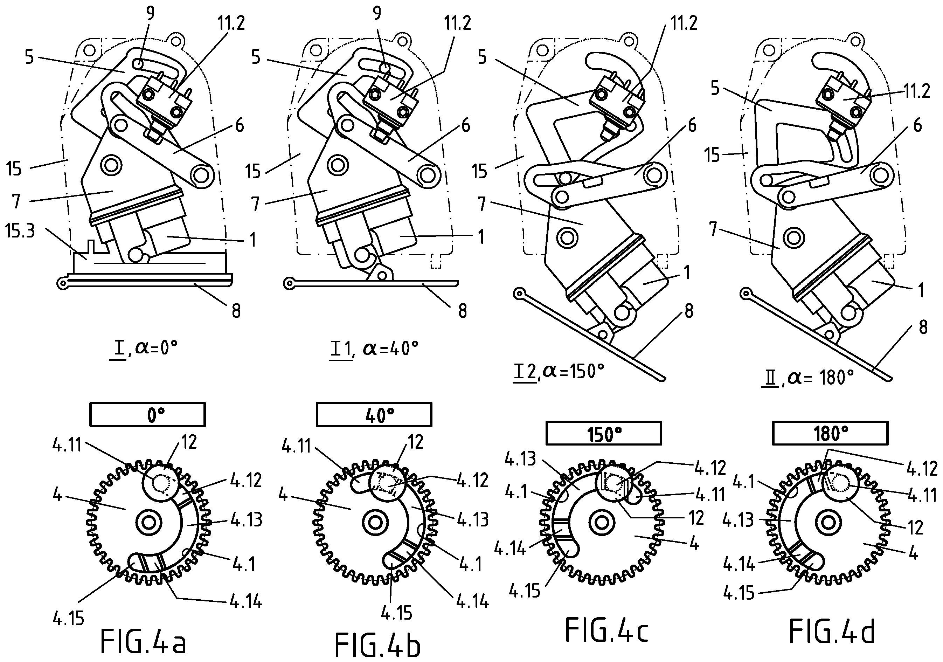

Die Figuren 4a bis 4d offenbaren die Bewegung der Kamera 1 zwischen der Ruheposition I, die einem Getrieberadwinkel α = 0° (Figur 4a) entspricht, und der Arbeitsposition II, die einem Getrieberadwinkel α = 180° (Figur 4d) entspricht. Dazwischen sind zwei Zwischenpositionen I1, I2 der Kamera 1 gezeigt, wobei eine erste Zwischenposition I1 einem Getrieberadwinkel α = 40° (Figur 4b) und eine zweite Zwischenposition I2 einem Getrieberadwinkel α = 150° (Figur 4c) entsprechen. Hierbei kann der Schalter 11 als ein "1/0" Schalter ausgeführt sein.

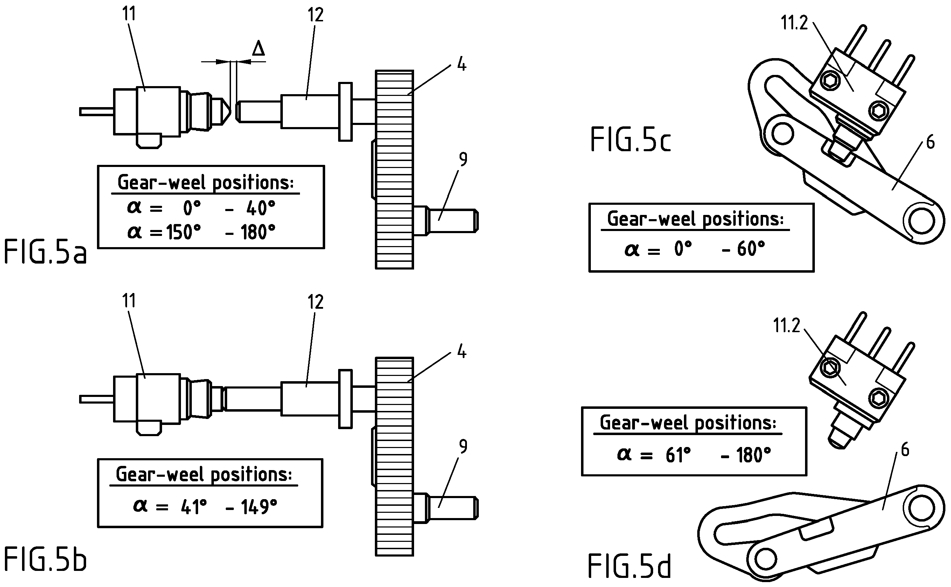

In der Ruheposition I der Kamera 1 gemäß der Figur 4a befindet sich das Betätigungselement 12 in einer Vertiefung 4.11 in der Führungskulisse 4.1, wobei das Betätigungselement 12 in dieser Position beabstandet zum Schalter 11 ist (Figur 5a).

In der ersten Zwischenposition I1 der Kamera 1 gemäß der Figur 4b befindet sich das Betätigungselement 12 auf einem Anstieg 4.12 zwischen der Vertiefung 4.11 und einem darauf folgenden Plateau 14.3 in der Führungskulisse 4.1, wobei das Betätigungselement 12 in dieser Position immer näher zum Schalter 11 herausgedrückt wird (Position zwischen der Figur 5a und der Figur 5b).

In der zweiten Zwischenposition I2 der Kamera 1 gemäß der Figur 4c hat das Betätigungselement 12 das Plateau 4.13 in der Führungskulisse 4.1 bereits passiert, wobei das Betätigungselement 12 währenddessen den Schalter 11 betätigt hat (Figur 5b), und schließlich auf einem Abstieg 4.14 in der Führungskulisse 4.1 angekommen, wobei das Betätigungselement 12 in dieser Position unter der Wirkung der Feder 13 immer weiter weg vom Schalter 11 befördert wird (Position zwischen der Figur 5a und der Figur 5b).

In der Arbeitsposition II der Kamera 1 gemäß der Figur 4d befindet sich das Betätigungselement 12 in einer Vertiefung 4.15 in der Kulisse 4.1, wobei das Betätigungselement 12 in dieser Position durch Wirkung der Feder 13 wieder beabstandet zum Schalter 11 ist (Figur 5a). Um zwischen der Ruheposition I und der Arbeitsposition II zu unterscheiden, kann hierbei die Laufrichtung des Getriebes 3 herangezogen werden.

Zusätzlich hierzu können selbstverständlich auch weitere Positionen der Kamera 1 in der Führungskulisse 4.1 durch entsprechende Vertiefungen oder Erhebungen im Höhenprofil markiert werden. Auch ist es denkbar, dass Endpositionen, wie die Ruheposition I oder die Arbeitsposition II, der Kamera 1 unterschiedlich markiert werden können, um zwischen den Endpositionen direkt durch unterschiedliche Ausgabesignale am Schalter 11 zu unterscheiden. Hierbei kann der Schalter 11 als ein "0/1/2" Schalter oder Taster ausgebildet sein.

Wie ferner in den Figuren 5a und 5b gezeigt ist, kann das Betätigungselement 12 zu einem Toleranzausgleich Δ genutzt werden. Mit anderen Worten kann das Betätigungselement 12 gemäß der Erfindung in einem gewissen Abstand Δ bzw. Spiel Δ zum Schalter 11 positioniert werden, welcher beim Zusammenbau und während des Betriebes der Vorrichtung 10 vorteilhafterweise als Toleranzausgleich Δ dienen kann. Zum Betätigen des Schalters 11 kann der Abstand Δ durch die Höhe des Abstieges 4.14 bzw. des Anstieges 4.12 überbrückt werden.

Die Figur 5a zeigt, dass das Betätigungselement 12 in den Positionen zwischen der Position in der Figur 4a und der Position in der Figur 4b sowie in den Positionen zwischen der Position in der Figur 4c und der Position in der Figur 4d beabstandet mit Abstand Δ zum Schalter 11 ist. Auf dem Plateau 4.13 der Führungskulisse 4.1 und zwischen den Positionen der Figur 4b und Figur 4c ist das Betätigungselement 12 herausgedrückt und betätigt den Schalter 11. Hierbei kann man von einer kontinuierlichen Übertragung der Bewegung der Kamera 1 durch das Betätigungselement 12 auf das Erfassungselement 11 sprechen.

Dagegen ist die Positionsbestimmung eines lediglich optionalen, zusätzlichen, zweiten Schalters 11.2 ziemlich ungenau, da der Schalter zwischen den Getriebegradwinkeln von 0° bis 60° beinahe durch das Schaukelelement 6 der Kamera 1 betätigt ist. Außerdem ist ein solcher Schalter 11.2, wenn überhaupt, zum Bestimmen nur einer Endposition, der Ruheposition I oder der Arbeitsposition II, geeignet. Aus diesem Grund wird der zweite Schalter 11.2, wie gezeigt in den Figuren 6a und 6b, lediglich optional, bspw. zur Verifizierung der Ergebnisse des ersten Schalters 11 herangezogen.

Die Vorrichtung 10 ist erfindungsgemäß in einem Gehäuse 15 untergebracht, welches selbstverständlich zumindest für die Kamera 1 abgedichtet sein kann. Das Gehäuse 15 ist erfindungsgemäß in ein erstes Gehäuseteil 15.1 und ein zweites Gehäuseteil 15.2 unterteilt, wobei das erste Gehäuseteil 15.1 zum Aufnehmen der Kamera 1 mit dem Schaukelelement 6, einem Hebelelement 5 und einem Schlitten 7 dient, und wobei das zweite Gehäuseteil 15.2 zum Aufnehmen des Antriebes 2, des Erfassungselementes 11 und des Betätigungselementes 12 dient. Das Hebelelement 5 ist dabei drehbar um eine erste Achse am ersten Gehäuseteil 15.1 angeordnet und wird durch einen Stift 9 am Getrieberad 4 angetrieben, insbesondere gedreht. Das Schaukelelement 6 ist ebenfalls drehbar am ersten Gehäuseteil 15.1, allerdings um eine andere, zweite Achse, gelagert und steht mit dem Hebelelement 5 in mechanischer Wirkverbindung. Die Kamera 1 ist dabei in einem Schlitten 7 austauschbar befestigt, welcher ebenfalls drehbar aber nicht am ersten Gehäuseteil 15.1, sondern am Schaukelelement 6 um eine dritte Achse gelagert ist. Weiterhin kann die Bewegung der Kamera 1 zumindest zum Teil durch eine nicht dargestellte Kulisse im ersten Gehäuseteil 15.1 mitbestimmt sein. Dadurch kann die Kamera 1 zu Anfang im Wesentlichen linear und später im Wesentlichen schwenkbar aus einer vorderseitigen Öffnung im ersten Gehäuseteil 15.1 herausfahren.

Erfindungsgemäß ist es vorteilhaft, dass das Betätigungselement 12 und das Erfassungselement 11 bzw. der Schalter 11 im zweiten Gehäuseteil 15.2 angeordnet sind. Somit wird die Verkabelung des Schalters 11 durch die Bewegung der Kamera 1 und durch den Zusammenbau der Vorrichtung 10 nicht beeinträchtigt, da die Verkabelung des Schalters 11 nahe einer Steckerbuchse 16 für den Antrieb 2 verlegt werden kann, um bspw. außerhalb der Vorrichtung 10 in einem gemeinsamen Verbundkabel zusammenzulaufen. Somit kann eine aufwendige Verlegung und Abknicken von Kabeln vermieden werden. Der Schalter 11 weist hierbei zumindest ein, insbesondere zwei oder drei Schaltkontakte 11.1, auf, die in der Steckerbuchse 16 für den Antrieb 2 integriert sein können. Somit kann die elektrische Kontaktierung des Schalters 11 in der Steckerbuchse 16 für den Antrieb 2 realisiert werden, bspw. auf einem Stanzgitter, welches in der Steckerbuchse 16 für den Antrieb 2 eingespritzt sein kann. Erfindungsgemäß kann die Steckerbuchse 16 zusammen mit dem integrierten Schaltkontakt 11.1 für den Schalter 11 als Teil des Gehäuses 15 ausgebildet sein, welches dadurch stabilisiert werden kann.

Ferner ist es denkbar, dass das zweite Gehäuseteil 15.2 vorderseitig ein Aktivelement aufweisen kann, welches zur Betätigung einer Schließvorrichtung des Kraftfahrzeuges ausgelegt sein kann. Das Aktivelement kann unterhalb des Antriebes 2 positioniert werden, wobei in der Ansicht der Figuren 1 und 6a das Aktivelement nicht zu sehen ist.

Vorderseitig ist das Gehäuse 1 durch ein Verkleidungselement 15.3 bzw. einen Montageträger 15.3 begrenzt, welches bzw. welcher zum Befestigen sämtlicher Gehäuseteile 15.1, 15.2 beim Zusammenbau der Vorrichtung 10 und zum Montieren der Vorrichtung 10 an einer Montageöffnung im Kraftfahrzeug dienen kann.

Sämtliche aus den Ansprüchen, der Beschreibung oder den Zeichnungen hervorgehenden Merkmale und/oder Vorteile, einschließlich konstruktiven Einzelheiten und räumlichen Anordnungen, können sowohl für sich alleine als auch in den verschiedensten Kombinationen, insbesondere basierend auf Figuren 1 bis 6b, erfindungswesentlich sein.

### Bezugszeichenliste

- 1: bewegliches Bauteil / Kamera
- 2: Antrieb
- 3: Getriebe
- 4: Getrieberad, Zahnrad von 3
- 4.1: Kulissenführung, insbesondere mit Höhenprofil
- 4.11: Position in der Kulissenführung entsprechend Getrieberadwinkel 0°
- 4.12: Position in der Kulissenführung entsprechend Getrieberadwinkel 40°
- 4.13: Position in der Kulissenführung entsprechend Getrieberadwinkel 41°-149°
- 4.14: Position in der Kulissenführung entsprechend Getrieberadwinkel 150°
- 4.15: Position in der Kulissenführung entsprechend Getrieberadwinkel 180°
- 5: Arm
- 6: Schaukelelement
- 7: Schlitten
- 8: Deckel
- 9: Stift

- 10: Vorrichtung
- 11: Erfassungselement, Schalter, Taster, Signalgeber oder Sensor
- 11.1: Schaltkontakt für das Erfassungselement
- 11.2: zusätzliches Erfassungselement
- 12: Betätigungselement
- 13: Feder
- 14: Gehäuseführung
- 15: Gehäuse
- 15.1: erstes Gehäuseteil
- 15.2: zweites Gehäuseteil
- 15.3: Verkleidungselement / Montageträger
- 16: Steckerbuchse für den Antrieb
- I: Ruheposition des beweglichen Bauteils
- I1: erste Zwischenposition des beweglichen Bauteils
- I2: zweite Zwischenposition des beweglichen Bauteils
- II: Arbeitsposition des beweglichen Bauteils

- α: Getrieberadwinkel
- Δ: Toleranzausgleich

## Patentansprüche

1. Vorrichtung (10) zur Positionsbestimmung einer beweglichen Kamera (1) oder eines Deckels oder eines Emblems, eines Kraftfahrzeuges, welches mittels eines Antriebes (2) zwischen einer Arbeitsposition (II) und einer Ruheposition (I) in Bewegung versetzbar ist, mit
einem, insbesondere nur einem, Erfassungselement (11) zum Bestimmen der Arbeitsposition (II) und/oder der Ruheposition (I) des beweglichen Bauteils,
und einem, insbesondere nur einem, Betätigungselement (12) zum Einwirken auf das Erfassungselement (11),
wobei die Vorrichtung (10) derart ausgebildet ist, dass die Bewegung des beweglichen Bauteils (1) über das Betätigungselement (12) auf das Erfassungselement (11) übertragbar ist,
**dadurch gekennzeichnet,**
**dass** das Erfassungselement (11) und/oder das Betätigungselement (12) zum Bestimmen der Arbeitsposition (II) und der Ruheposition (I) des beweglichen Bauteils ausgeführt sind/ist.

2. Vorrichtung (10) nach Anspruch 1,
**dadurch gekennzeichnet,**
**dass** das Erfassungselement (11) derart ausgeführt ist, um mit einer externen Steuereinheit des Kraftfahrzeuges, insbesondere des beweglichen Bauteils (1), zu kommunizieren und/oder
**dass** das Erfassungselement (11) derart ausgeführt ist, um zwischen der Arbeitsposition (II) und der Ruheposition (I) des beweglichen Bauteils (1) ein Signal auszugeben.

3. Vorrichtung (10) nach einem der vorhergehenden Ansprüche,
**dadurch gekennzeichnet,**
**dass** das Erfassungselement (11) derart ausgeführt ist, um in der Arbeitsposition (II) und in der Ruheposition (I) des beweglichen Bauteils (1) kein Signal auszugeben, insbesondere dass das Erfassungselement (11) zum Ausgeben eines 0/1 Signals ausgeführt ist, wobei insbesondere das Erfassungselement (11) in Form eines Schalters (11) ausgeführt ist und/oder
**dass** das Erfassungselement (11) derart ausgeführt ist, um in der Arbeitsposition (II) ein Signal und in der Ruheposition (I) kein Signal auszugeben oder umgekehrt, insbesondere dass das Erfassungselement (11) zum Ausgeben eines 0/1/2 Signals ausgeführt ist, wobei insbesondere das Erfassungselement (11) in Form eines Schalters (11) ausgeführt ist.

4. Vorrichtung (10) nach einem der vorhergehenden Ansprüche,
**dadurch gekennzeichnet,**
**dass** das Betätigungselement (12) in Form eines Stößels (12) ausgebildet ist, insbesondere dass das Betätigungselement (12) mit einer Feder (13), insbesondere in Richtung weg vom Erfassungselement (11), beaufschlagt ist,
bevorzugt dass das Betätigungselement (12) zum Toleranzausgleich (Δ) am Erfassungselement (11) ausgelegt ist.

5. Vorrichtung (10) nach einem der vorhergehenden Ansprüche,
**dadurch gekennzeichnet,**
**dass** ein Gehäuse (15) vorgesehen ist, welches zumindest ein erstes Gehäuseteil (15.1) und ein zweites Gehäuseteil (15.2) aufweist,
wobei das erste Gehäuseteil (15.1) zumindest zum Teil einen Aufnahmeraum für das bewegliche Bauteil (1) begrenzt,
und wobei das zweite Gehäuseteil (15.2) zumindest zum Teil einen Aufnahmeraum für den Antrieb (2) begrenzt,
und **dass** das Erfassungselement (11) und/oder das Betätigungselement (12) im zweiten Gehäuseteil (15.2) befestigt sind/ist.

6. Vorrichtung (10) nach einem der vorhergehenden Ansprüche,
**dadurch gekennzeichnet,**
**dass** das Gehäuse (15), insbesondere das zweite Gehäuseteil (15.2), ein Aktivelement aufnimmt, welches zur Betätigung einer Schließvorrichtung des Kraftfahrzeuges ausgelegt ist und/oder
**dass** das Gehäuse (15) vorderseitig ein Verkleidungselement (15.3) aufweist, welches zur Befestigung der Vorrichtung (10) an einer Montageöffnung des Kraftfahrzeuges ausgelegt ist.

7. Vorrichtung (10) nach einem der vorhergehenden Ansprüche,
**dadurch gekennzeichnet,**
**dass** das Gehäuse (15), insbesondere das erste Gehäuseteil (15.1) und das zweite Gehäuseteil (15.2) eine Längserstreckung, insbesondere in Fahrzeugquerrichtung, aufweisen, so dass der Aufnahmeraum für das bewegliche Bauteil (1) und der Aufnahmeraum für den Antrieb (2) in Fahrzeugquerrichtung nebeneinander liegen.

8. Vorrichtung (10) nach einem der vorhergehenden Ansprüche,
**dadurch gekennzeichnet,**
**dass** das Gehäuse (15), insbesondere das zweite Gehäuseteil (15.2), eine Steckerbuchse (16) für den Antrieb (2) aufweist,
insbesondere dass das Erfassungselement (11) angrenzend an die Steckerbuchse (16) für den Antrieb (2) angeordnet ist oder in die Steckerbuchse (16) für den Antrieb (2) integriert ist.

9. Vorrichtung (10) nach einem der vorhergehenden Ansprüche,
**dadurch gekennzeichnet,**
**dass** ein Schaltkontakt (11.1) für das Erfassungselement (11) in der Steckerbuchse (16) für den Antrieb (2) integriert ist und/oder
**dass** ein Schaltkontakt (11.1) für das Erfassungselement (11) auf einem Stanzgitter angeordnet ist, wobei insbesondere das Stanzgitter in der Steckerbuchse (16) für den Antrieb (2) eingespritzt ist.

10. Vorrichtung (10) nach einem der vorhergehenden Ansprüche,
**dadurch gekennzeichnet,**
**dass** das Betätigungselement (12) zwischen einem Getriebe (3) für den Antrieb (2) und dem Erfassungselement (11) angeordnet ist,
insbesondere dass das Betätigungselement (12) mit einem Getriebe (3) für den Antrieb (2) zusammenwirkt.

11. Vorrichtung (10) nach einem der vorhergehenden Ansprüche,
**dadurch gekennzeichnet,**
**dass** ein Getrieberad (4) vorgesehen ist, welches in einem Getriebe (3) für den Antrieb (2) einsetzbar ist, um auf das Betätigungselement (12) einzuwirken,
insbesondere dass das Getrieberad (4) eine Führung (4.1), insbesondere eine Kulissenführung (4.1), für das Betätigungselement (12) aufweist.

12. Vorrichtung (10) nach einem der vorhergehenden Ansprüche,
**dadurch gekennzeichnet,**
**dass** ein zweites Erfassungselement (11.2) im ersten Gehäuseteil (15.1) vorgesehen ist, um die Ruheposition (I) und/oder die Arbeitsposition (II) des beweglichen Bauteils (1) zu detektieren.

13. Vorrichtung (10) nach einem der vorhergehenden Ansprüche,
**dadurch gekennzeichnet,**
**dass** die Vorrichtung (10) als eine Kameravorrichtung (10), insbesondere eine Heckkameravorrichtung (10), des Kraftfahrzeuges ausgebildet ist.

14. Verfahren zum Zusammenbauen einer Baugruppe, mit einer beweglichen Kamera (1) oder einem Deckel oder einem Emblem, eines Kraftfahrzeuges,
einem Antrieb (2) zum Antreiben des beweglichen Bauteils (1) zwischen einer Arbeitsposition (II) und einer Ruheposition (I),
einem Getriebe (3) zum Übertragen einer Antriebswirkung auf das bewegliche Bauteil (1), und einer Vorrichtung (10) zur Positionsbestimmung des beweglichen Bauteils (1), insbesondere nach einem der vorhergehenden Ansprüche,
wobei die Vorrichtung (10) mit einem Gehäuse (15), welches zumindest ein erstes Gehäuseteil (15.1) und ein zweites Gehäuseteil (15.2) aufweist,
wobei das erste Gehäuseteil (15.1) zumindest zum Teil einen Aufnahmeraum für das bewegliche Bauteil (1) begrenzt,
und wobei das zweite Gehäuseteil (15.2) zumindest zum Teil einen Aufnahmeraum für den Antrieb (2) begrenzt,
und einem Erfassungselement (11) zum Bestimmen der Arbeitsposition (II) und der Ruheposition (I) des beweglichen Bauteils (1), ausgeführt ist,
**wobei das Verfahren folgende Schritte aufweist:**
a) Montieren des beweglichen Bauteils (1) im bzw. am ersten Gehäuseteil (15.1),
b) Montieren des Antriebes (2) und/oder des Getriebes (3) für den Antrieb (2) im bzw. am zweiten Gehäuseteil (15.2),
c) Montieren des Erfassungselementes (11) im bzw. am zweiten Gehäuseteil (15.2), insbesondere zwischen dem Antrieb (2) und dem Getriebe (3).

## Claims

1. Device (10) for determining the position of a movable camera (1) or of a cover or of an emblem of a motor vehicle, which can be set in motion between a working position (II) and a rest position (I) by means of a drive (2), having
a detection element (11), in particular only one, for determining the working position (II) and/or the rest position (I) of the movable component,
and an actuating element (12), in particular only one, for acting on the detection element (11),
the device (10) being designed such that the movement of the movable component (1) can be transmitted to the detection element (11) via the actuating element (12),
**is characterized in that**
the detection element (11) and/or the actuating element (12) are/is designed for determining the working position (II) and the rest position (I) of the movable component.

2. Device (10) according to claim 1,
**is characterized in that**
the detection element (11) is designed in such a way as to communicate with an external control unit of the motor vehicle, in particular of the movable component (1), and/or
**in that** the detection element (11) is designed in such a way as to output a signal between the working position (II) and the rest position (I) of the movable component (1).

3. Device (10) according to one of the preceding claims,
**is characterized in that**
the detection element (11) is designed such that no signal is output in the working position (II) and in the rest position (I) of the movable component (1),
in particular that the detection element (11) is designed for outputting a 0/1 signal, in particular the detection element (11) being designed in the form of a switch (11), and/or in that the detection element (11) is designed in such a way as to output a signal in the working position (II) and no signal in the rest position (I), or vice versa,
in particular that the detection element (11) is designed for outputting a 0/1/2 signal, in particular the detection element (11) being designed in the form of a switch (11).

4. Device (10) according to one of the preceding claims,
**is characterized in that**
the actuating element (12) is in the form of a plunger (12),
in particular **in that** the actuating element (12) is acted upon by a spring (13), in particular in the direction away from the detection element (11),
preferably **in that** the actuating element (12) is designed for tolerance compensation (Δ) on the detection element (11).

5. Device (10) according to one of the preceding claims,
**is characterized in that**
a housing (15) is provided which has at least a first housing part (15.1) and a second housing part (15.2),
the first housing part (15.1) at least partially defining a receiving space for the movable component (1),
and wherein the second housing part (15.2) at least partially defines a receiving space for the drive (2),
and **in that** the detection element (11) and/or the actuating element (12) are/is fastened in the second housing part (15.2).

6. Device (10) according to one of the preceding claims,
**is characterized in that**
the housing (15), in particular the second housing part (15.2), accommodates an active element which is designed for actuating a closing device of the motor vehicle and/or in that the housing (15) has at the front a trim element (15.3)which is designed for fastening the device (10) to an assembly opening of the motor vehicle.

7. Device (10) according to one of the preceding claims,
**is characterized in that**
the housing (15), in particular the first housing part (15.1) and the second housing part (15.2) have a longitudinal extension, in particular in the transverse direction of the vehicle, so that the receiving space for the movable component (1) and the receiving space for the drive (2) lie next to one another in the transverse direction of the vehicle.

8. Device (10) according to one of the preceding claims,
**is characterized in that**
the housing (15), in particular the second housing part (15.2), has a plug socket (16) for the drive (2),
in particular **in that** the detection element (11) is arranged adjacent to the plug socket (16) for the drive (2) or is integrated into the plug socket (16) for the drive (2).

9. Device (10) according to one of the preceding claims,
**is characterized in that** a switching contact (11.1) for the detection element (11) is integrated in the plug socket (16) for the drive (2), and/or
**in that** a switching contact (11.1) for the detection element (11) is arranged on a punched grid, in particular the punched grid being injected into the plug socket (16) for the drive (2).

10. Device (10) according to one of the preceding claims,
**is characterized in that**
the actuating element (12) is arranged between a transmission (3) for the drive (2) and the detection element (11),
in particular **in that** the actuating element (12) interacts with a transmission (3) for the drive (2).

11. Device (10) according to one of the preceding claims,
**is characterized in that**
a gear wheel (4) is provided which can be inserted in a transmission (3) for the drive (2) in order to act on the actuating element (12),
in particular **in that** the gear wheel (4) has a guide (4.1), in particular a link guide (4.1), for the actuating element (12).

12. Device (10) according to one of the preceding claims,
**is characterized in that**
a second detection element (11.2) is provided in the first housing part (15.1) in order to detect the rest position (I) and/or the working position (II) of the movable component (1).

13. Device (10) according to one of the preceding claims,
**is characterized in that** the device (10) is designed as a camera device (10), in particular a rear camera device (10), of the motor vehicle.

14. Method for assembling an assembly comprising
a movable camera (1) or a cover or emblem of a motor vehicle,
a drive (2) for driving the movable component (1) between a working position (II) and a rest position (I),
a transmission (3) for transmitting a driving action to the movable component (1),
and a device (10) for determining the position of the movable component (1), in particular according to one of the preceding claims,
the device (10) having a housing (15) which has at least a first housing part (15.1) and a second housing part (15.2),
the first housing part (15.1) at least partially defining a receiving space for the movable component (1),
and wherein the second housing part (15.2) at least partially defines a receiving space for the drive (2),
and a detection element (11) for determining the working position (II) and the rest position (I) of the movable component (1),
**said method comprising the steps of:**
a) Mounting the movable part (1) in or on the first housing part (15.1),
b) Mounting the drive (2) and/or the transmission (3) for the drive (2) in or on the second housing part (15.2),
c) mounting the detection element (11) in or on the second housing part (15.2), in particular between the drive (2) and the transmission (3).

## Revendications

1. Dispositif (10) dévolu à la détermination de l'emplacement d'une caméra mobile (1) ou d'un capot, voire d'un emblème d'un véhicule automobile pouvant être mis(e) en mouvement, au moyen d'un entraînement (2), entre un emplacement de travail (II) et un emplacement de repos (I), comprenant
un, en particulier un seul élément de détection (11) affecté à la détermination de l'emplacement de travail (II) et/ou de l'emplacement de repos (I) de la pièce structurelle mobile,
et un, en particulier un seul élément d'actionnement (12) destiné à agir sur ledit élément de détection (11),
ledit dispositif (10) étant réalisé de façon telle que le mouvement de ladite pièce structurelle mobile (1) puisse être transmis audit élément de détection (11) par l'intermédiaire dudit élément d'actionnement (12),
**caractérisé par le fait**
**que** l'élément de détection (11), et/ou l'élément d'actionnement (12), est (sont) réalisé(s) en vue de la détermination de l'emplacement de travail (II) et de l'emplacement de repos (I) de la pièce structurelle mobile.

2. Dispositif (10) selon la revendication 1,
**caractérisé par le fait**
**que** l'élément de détection (11) est réalisé pour communiquer avec une source de commande extérieure du véhicule automobile, en particulier de la pièce structurelle mobile (1) ; et/ou
par le fait que ledit élément de détection (11) est réalisé pour délivrer un signal entre l'emplacement de travail (II) et l'emplacement de repos (I) de ladite pièce structurelle mobile (1).

3. Dispositif (10) selon l'une des revendications précédentes,
**caractérisé par le fait**
**que** l'élément de détection (11) est réalisé pour ne délivrer aucun signal à l'emplacement de travail (II) et à l'emplacement de repos (I) de la pièce structurelle mobile (1); notamment par le fait que ledit élément de détection (11) est réalisé pour délivrer un signal 0/1, ledit élément de détection (11) étant réalisé, en particulier, sous la forme d'un commutateur (11) ; et/ou
par le fait que ledit élément de détection (11) est réalisé pour délivrer un signal à l'emplacement de travail (II) et aucun signal à l'emplacement de repos (I), ou inversement; notamment par le fait que ledit élément de détection (11) est réalisé pour délivrer un signal 0/1/2, ledit élément de détection (11) étant réalisé, en particulier, sous la forme d'un commutateur (11).

4. Dispositif (10) selon l'une des revendications précédentes,
**caractérisé par le fait**
**que** l'élément d'actionnement (12) est réalisé sous la forme d'un coulisseau (12); notamment par le fait que ledit élément d'actionnement (12) est sollicité par un ressort (13), en particulier dans une direction l'éloignant de l'élément de détection (11);
de préférence, par le fait que ledit élément d'actionnement (12) est agencé en vue de la compensation de tolérances (Δ) sur ledit élément de détection (11).

5. Dispositif (10) selon l'une des revendications précédentes,
**caractérisé par le fait**
**qu'**il est prévu un boîtier (15) composé, au moins, d'une première partie (15.1) et d'une seconde partie (15.2),
la première partie (15.1) du boîtier délimitant, au moins partiellement, un espace de réception dévolu à la pièce structurelle mobile (1),
et la seconde partie (15.2) dudit boîtier délimitant, au moins partiellement, un espace de réception dédié à l'entraînement (2);
et par le fait que l'élément de détection (11), et/ou l'élément d'actionnement (12), est (sont) fixé(s) dans ladite seconde partie (15.2) du boîtier.

6. Dispositif (10) selon l'une des revendications précédentes,
**caractérisé par le fait**
**que** le boîtier (15), notamment la seconde partie (15.2) dudit boîtier, reçoit un élément opérant agencé en vue de l'actionnement d'un dispositif de fermeture du véhicule automobile ; et/ou
par le fait que ledit boîtier (15) est pourvu, à la face antérieure, d'un élément d'habillage (15.3) agencé en vue de la fixation dudit dispositif (10) au niveau d'un orifice de montage dudit véhicule automobile.

7. Dispositif (10) selon l'une des revendications précédentes,
**caractérisé par le fait**
**que** le boîtier (15), notamment la première partie (15.1) dudit boîtier et la seconde partie (15.2) dudit boîtier, présentent une étendue longitudinale, en particulier dans la direction transversale du véhicule, de façon telle que l'espace de réception dévolu à la pièce structurelle mobile (1), et l'espace de réception dédié à l'entraînement (2), soient placés en juxtaposition dans ladite direction transversale du véhicule.

8. Dispositif (10) selon l'une des revendications précédentes,
**caractérisé par le fait**
**que** le boîtier (15), notamment la seconde partie (15.2) dudit boîtier, présente une douille d'enfichage (16) affectée à l'entraînement (2) ;
notamment par le fait que l'élément de détection (11) occupe une position adjacente à ladite douille d'enfichage (16) affectée à l'entraînement (2), ou est intégré dans ladite douille d'enfichage (16) affectée audit entraînement (2).

9. Dispositif (10) selon l'une des revendications précédentes,
**caractérisé par le fait**
**qu'**un contact de commutation (11.1), dévolu à l'élément de détection (11), est intégré dans la douille d'enfichage (16) affectée à l'entraînement (2) ; et/ou
par le fait qu'un contact de commutation (11.1) dévolu audit élément de détection (11) est situé sur une grille estampée, sachant notamment que ladite grille estampée est noyée, par injection, dans ladite douille d'enfichage (16) affectée audit entraînement (2).

10. Dispositif (10) selon l'une des revendications précédentes,
**caractérisé par le fait**
**que** l'élément d'actionnement (12) est interposé entre une transmission (3), dédiée à l'entraînement (2), et l'élément de détection (11) ;
notamment par le fait que ledit élément d'actionnement (12) coopère avec une transmission (3) dédiée audit entraînement (2).

11. Dispositif (10) selon l'une des revendications précédentes,
**caractérisé par le fait**
**qu'**il est prévu une roue d'engrenage (4) pouvant être intégrée dans une transmission (3) dédiée à l'entraînement (2), en vue d'agir sur l'élément d'actionnement (12) ; notamment par le fait que ladite roue d'engrenage (4) est munie d'un guide (4.1), en particulier d'un guide de coulissement (4.1) dévolu audit élément d'actionnement (12).

12. Dispositif (10) selon l'une des revendications précédentes,
**caractérisé par le fait**
**qu'**un second élément de détection (11.2) est prévu dans la première partie (15.1) du boîtier, afin de détecter l'emplacement de repos (I) et/ou l'emplacement de travail (II) de la pièce structurelle mobile (1).

13. Dispositif (10) selon l'une des revendications précédentes,
**caractérisé par le fait**
**que** ledit dispositif (10) est réalisé en tant que dispositif (10) à caméra, notamment un dispositif (10) à caméra de recul du véhicule automobile.

14. Procédé d'assemblage d'un groupe structurel comprenant une caméra mobile (1) ou un capot, voire un emblème d'un véhicule automobile,
un entraînement (2), pour entraîner la pièce structurelle mobile (1) entre un emplacement de travail (II) et un emplacement de repos (I),
une transmission (3), destinée à transmettre un effet d'entraînement à la pièce structurelle mobile (1),
et un dispositif (10) notamment conforme à l'une des revendications précédentes, dévolu à la détermination de l'emplacement de ladite pièce structurelle mobile (1),
lequel dispositif (10) est pourvu d'un boîtier (15) composé, au moins, d'une première partie (15.1) et d'une seconde partie (15.2),
ladite première partie (15.1) du boîtier délimitant, au moins partiellement, un espace de réception dévolu à la pièce structurelle mobile (1),
et la seconde partie (15.2) dudit boîtier délimitant, au moins partiellement, un espace de réception dédié audit entraînement (2),
et un élément de détection (11), affecté à la détermination de l'emplacement de travail (II) et de l'emplacement de repos (I) de ladite pièce structurelle mobile (1),
**ledit procédé incluant les étapes suivantes** :
a) montage de la pièce structurelle mobile (1) dans, respectivement sur la première partie (15.1) du boîtier,
b) montage respectif de l'entraînement (2), et/ou de la transmission (3) dédiée audit entraînement (2), dans ou sur la seconde partie (15.2) dudit boîtier,
c) montage de l'élément de détection (11) dans, respectivement sur ladite seconde partie (15.2) dudit boîtier, en particulier entre ledit entraînement (2) et ladite transmission (3).
